# EUROPEAN PATENT SPECIFICATION

(11) **EP 2 633 628 B1**
(45) Date of publication and mention of the grant of the patent: **19.08.2015**
(21) Application number: 10773619.1
(22) Date of filing: 27.10.2010
(51) Int. Cl.: H04B 1/38, H04W 88/06

(54) **MOBILE TERMINAL WITH MUTLIPLE SIM CARDS**
MOBILES ENDGERÄT MIT MEHREREN SIM-KARTEN
TERMINAL MOBILE AVEC PLUSIEURS CARTES SIM

(43) Date of publication of application: 04.09.2013
(73) Proprietor: Telefonaktiebolaget L M Ericsson (PUBL), 164 83 Stockholm (SE)
(72) Inventor: NEUMANN, Markus, 90455 Nürnberg (DE); BRAND, Roland, 91052 Erlangen (DE)
(74) Representative: Burchardi, Thomas
(86) International application number: PCT/EP2010/066273
(87) International publication number: WO 2012/055434

(56) References cited:
- WO-A1-01/30097
- WO-A1-2010/073210
- WO-A2-2009/040761
- GB-A- 2 381 418
- GB-A- 2 439 370

## Description

### Technical Field

The present invention relates to a user equipment comprising a plurality of radio braches, each branch being configured to exchange information with at least one telecommunications network using a subscriber identification interface of the user equipment and to a method for operating the user equipment.

### Background

Modern mobile telecommunication standards, for example LTE (Long-term Evolution) aim to increase the data rate exchanged between a user equipment and the mobile telecommunication network. One of the possibilities is the use of MIMO (Multiple Input/Multiple Output). MIMO means that there are multiple radio subsystems for reception and multiple radio subsystems for transmission. In case of reception the signal combination is done in the baseband circuitry.

Furthermore, the number of people that carry two or more mobile phones/user equipments with them is increasing. One of the mobile phones may be a private phone and the other one a business phone.

For increased data rates MIMO in the uplink as well as in the downlink is desirable, uplink describing the transmission of data from the user equipment to the mobile telecommunications network and downlink describing the transmission of data from the network to the user equipment. In the example of LTE MIMO is required in 3GPP Release 8 and further releases

For LTE the MIMO technology with two transmission carriers in the uplink is beneficial for uplink data rates higher than 75 MBit/s.

Furthermore, "Dual SIM mobile phones" are known in the art which comprise two subscriber identification modules (SIM) that are dedicated each to an individual radio branch. These mobile phones have completely separated architectures for the two radio branches and typically have separated baseband, power supply, and radio circuitry.

An example of a multiple SIM mobile terminal according to the prior art is disclosed in GB 2381418.

### Summary

From a signalling perspective however these solutions are not suitable for dynamically assigning the radio branches between different networks and/or radio paths.

Accordingly, a more flexible use of the provided two or more radio branches is desired, especially when higher data rates should be transmitted, particularly in combination with alternative use of multiple subscriber identification modules.

This desire is met by the features of the independent claims. The dependent claims describe preferred embodiments of the invention.

According to a first aspect of the invention a user equipment is provided comprising a plurality of radio branches, each being configured to exchange information with at least one telecommunications network using a subscriber identification interface of the user equipment. The user equipment furthermore comprises a processing and control unit processing the information received from one or a plurality of telecommunications networks and controlling the plurality of radio branches, wherein the processing and control unit is configured to operate in a first operating mode in which at least two of the plurality of radio branches exchange information with one telecommunications network using a subscriber identification interface associated with said one telecommunications network. The processing and control unit can further operate in a second operating mode in which a first radio branch out of the plurality of radio branches exchanges information with a first telecommunications network using a subscriber identification interface associated with said first telecommunications network, wherein a second radio branch of the plurality of radio branches exchanges information with a second telecommunications network using a subscriber identification interface associated with said second telecommunications network. The user equipment comprises two or more radio branches and a single processing and control unit processing the information received from one or at least two telecommunications networks depending on the operating mode.

A telecommunications network can be a telecommunications network of a certain provider or a telecommunications network of a certain radio access technology (RAT). Examples of telecommunications networks of different RATs may include, but are not limited to, UMTS, CDMA2000, GSM and LTE. In the first operating mode two or more radio branches are used to exchange information with a single network. This can help to increase the exchanged data rate, as two radio branches can be used to receive information from a single telecommunications network. In the second operating mode the different radio branches are used to exchange information with different telecommunications networks. The processing and control unit can switch between the first and second operating mode depending on different requirements, such as the data rate to be transmitted, the reception quality or a user input indicating which operating mode should be selected. Thus, the user equipment can be flexibly used in dependence on the needs of the user and can be adapted to different reception situations.

According to one embodiment the processing and control unit can be configured, at least in the first operating mode, to combine baseband signals received from the at least two of the plurality of radio branches and/or to split the baseband signals for transmission via at least two of the radio branches. By combining the baseband signals in the processing and control unit the signals can either be received or transmitted in a higher quality or the data rate of the transmitted or received information can be increased, as each of the radio branches can receive a part of the information which is then combined by the processing and control unit. Furthermore, it is possible in another embodiment that the processing and control unit is configured to receive and/or transmit the same information from one telecommunications network or to a telecommunications network via a plurality of radio paths using the same radio access technology for connection with the plurality of radio branches and to complimentary combine a plurality of reception signals and/or to split a transmission signal into a plurality of signals. In this embodiment, also named antenna diversity, the same radio access technology and/or cell and/or radio band is used. This embodiment, being an operation mode of the first operating mode, can mean antenna diversity or MIMO. This operating mode can be used when the reception quality at the user equipment and/or at the base station should be improved and/or the data rate shall be increased.

In another embodiment the processing and control unit can be configured to receive information from one or a plurality of telecommunications networks and/or to transmit information to one or a plurality of telecommunications networks, wherein different radio access technologies and/or cells and/or radio bands and/or carrier frequencies are used for at least two of the plurality of radio branches. The processing and control unit can further be configured to combine a plurality of reception signals and/or to select one of the reception signals and/or to split a transmission signal into a plurality of signals. In this embodiment information is transmitted using different radio access technologies and/or cells and/or radio bands and/or carrier frequencies. By way of example the information may be transmitted using GSM and LTE or UMTS and LTE or CDMA2000 and LTE, etc. In this embodiment typically only one radio path per radio branch is used. Scattering effects of a single radio path which may cause multipath propagation are known, but are neglected in this discussion. The information to be received or transmitted may include the same information being received and/or transmitted via different radio access technologies and/or cells and/or radio bands and/or carrier frequencies, different parts of information being received and/or transmitted via different radio access technologies and/or cells and/or radio bands and/or carrier frequencies, and different information being received and/or transmitted via different radio access technologies and/or cells and/or radio bands, and/or carrier frequencies.

In another embodiment the processing and control unit can be configured to receive and/or transmit information from and/or to one or a plurality of telecommunications networks, wherein the information is split up into different parts, wherein a first part is received/transmitted using a first radio access technology and/or cell and/or radio band and/or carrier frequency and a second part is received or transmitted using a second radio access technology and/or cell and/or radio band and/or carrier frequency, the processing and control unit further being configured to combine the received first and second parts and/or to split information to be transmitted into multiple parts. In this embodiment the exchanged information is transmitted in different parts using different radio access technologies and/or cells and/or radio bands and/or carrier frequencies, the processing and control unit combining the different parts. For this operating mode either a single subscriber identification interface or different subscriber identification interfaces can be used. The different parts of the information can be transmitted simultaneously or in a timely order. It should be understood that the information may be split up into more than two parts, it can be split up in several parts with a sequential split in an alternating manner.

In the first operating mode the processing and control unit can be configured to switch one of the radio branches in defined time intervals to another telecommunications network to monitor whether information is to be received from the other telecommunications network or whether information is to be transmitted to the another telecommunications network. When two of the radio branches are connected to the same telecommunications network, it may be helpful to also check in certain time intervals whether information has to be exchanged with the other telecommunications network. If it is detected that information is to be received on the other telecommunications network, the processing and control unit can adapt the operating mode accordingly in order to receive the information also from said another telecommunications network.

The user equipment may also work in a discontinuous reception and/or transmission mode in which the processing and control unit is configured to connect two of the plurality of radio branches to a first and a second telecommunications network in an alternating way, wherein both radio branches are simultaneously connected to the same, first or second, telecommunications network. In this operating mode the two radio branches connect at the same time to the same telecommunications network, both radio branches connecting to the two different telecommunications networks in the alternating way.

If, in this embodiment of the discontinuous reception and/or transmission mode, the processing and control unit detects a collision situation in which information is to be received from the first and from the second telecommunications network simultaneously or transmitted to the first and the second telecommunications network simultaneously, the processing and control unit can be configured to switch to the second operating mode. In the second operating mode the information from the first and second telecommunications network can then be received or transmitted.

The invention furthermore relates to a method for operating the user equipment, the method comprising the steps of processing the information received from one or a plurality of telecommunications networks in a processing and control unit. Furthermore, the method comprises the step of selecting a first operating mode of the information processing and control unit in which at least two of the radio branches exchange information with one telecommunications network using a subscriber identification interface associated with said one telecommunications network. Furthermore, a second operating mode can be selected in which a first radio branch of the radio branches exchanges information with a first telecommunications network using a subscriber identification interface associated with said first telecommunications network and in which a second radio branch from the plurality of radio branches exchanges information with a second telecommunications network using a subscriber identification interface associated with the second telecommunications network. The selection of the first or second operating mode and the switching from one mode to the other can depend on predefined criteria, such as the expected data rate, the quality of the received radio signal, etc.

The user equipment can be operated as discussed above in the different embodiments. The switching from a first telecommunications network to one or more of the other telecommunications networks can be done following a network originated scheduling. Here the radio access network may be responsible for the scheduling. However, in another embodiment the user equipment itself may determine the switching from one operating mode to another operating mode or the switching from one telecommunications network to another telecommunications network.

As a default operating mode the first operating mode may be selected or the second operating mode or the first operating mode in which one of the radio branches is connected to another telecommunications network at different time intervals to monitor whether information is to be received and/or transmitted from and/or to the another telecommunications network. Furthermore, the default operating mode may be the mode where the information is transmitted and/or received in the discontinuous reception mode from at least two telecommunications networks, in which both radio branches are switched from one to another telecommunications network in an alternating way, wherein both radio branches are connected simultaneously to the same telecommunications network. A further default operating mode may be an operating mode where one of the radio branches is switched off and the other radio branch exchanges information with one of the telecommunications networks using a subscriber identification interface.

According to another embodiment the operating mode may be switched to the first operating mode when a signal reception parameter with which the information is detected from said one telecommunications network is lower than a predefined threshold. This means when a signal reception parameter, such as any suitable measurement of the strength of the received radio signal, is lower than the predefined threshold, the first operating mode may be selected in order to improve the quality of the received signal and/or increase the data rate. Before the switching operation the user equipment may be operating in any of the other operating modes.

In another embodiment the operating mode may be switched to the second operating mode when the signal reception parameter with which the information is detected from said one telecommunications network is higher than a predefined threshold. In this example the quality of the received signal is satisfying, so that there is no need to work in the first operating mode, so that the second operating mode can be selected.

The switching to one of the different operating modes can be network-initiated, user equipment initiated - e.g. under control of the processing and controlling unit, for example based on signal strength measurements - or user-initiated.

The different embodiments described above may be combined in any way. The above as well as additional objectives, features and advantages of the present invention will become apparent in the following detailed description.

### Brief Description of the Drawings

The invention as well as preferred modes of use, further objects and advantages thereof, will best be understood by reference to the following detailed description of illustrative embodiments when read in conjunction with the accompanying drawings, wherein
Fig. 1 shows a block diagram of a first architecture of a user equipment using a single processing and controlling unit and two radio branches,
Fig. 2 shows a block diagram of a user equipment as shown in Fig. 1, however using one radio integrated circuit,
Fig. 3 shows a block diagram of a user equipment as shown in Figs. 1 and 2 utilizing a single chip integrated circuit,
Fig. 4 shows an operating mode of the user equipment where the two radio branches are connected to one network while still listening to paging events on the other network,
Fig. 5 shows an operating mode where the two radio branches are dynamically switched between different networks in an alternating way,
Fig. 6 shows a flowchart comprising the steps from switching from a default operating mode to another operating mode,
Fig. 7 shows a flowchart comprising the steps where the operating mode is switched from a dual SIM operating mode to a MIMO operating mode,
Fig. 8 shows a flowchart comprising the steps for switching to the dual SIM mode, and
Fig. 9 shows a table listing different operating modes.

### Detailed Description

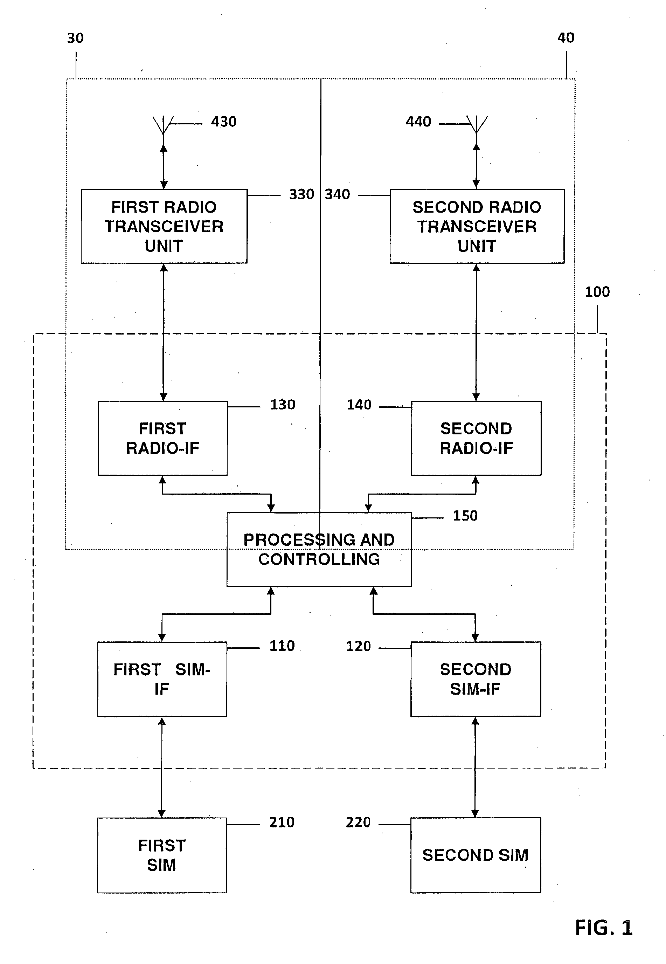

In Fig. 1 a mobile communications user equipment is shown comprising different functional entities. These functional entities may be incorporated by hardware or software or a combination of hardware and software. The user equipment comprises a baseband integrated circuit 100, a first radio branch 30 and a second radio branch 40. The first radio branch 30 comprises a first radio interface 130, a first radio transceiver unit 330 and a first antenna 430. The second radio branch 40 comprises a second radio interface 140, a second radio transceiver unit 340, and a second antenna 440. The user equipment furthermore comprises a single processing and controlling unit 150 that processes the information received from the two radio branches 30, 40. It should be understood that more than two radio branches may be provided. The present invention can be explained with the two radio branches shown, however the invention also works with three or more radio branches per user equipment.

The user equipment furthermore comprises a first subscriber identification module (SIM) interface 110 to which a first SIM 210 can be connected. Furthermore, a second SIM interface 120 is provided that can be connected to the second SIM 220. The digital baseband circuitry 100 is equipped with at least two SIM interfaces 110, 120 to which the first and second SIMs 210, 220 are connected.

Each radio branch may comprise additional elements, such as a power amplifier, filter elements etc. (not shown).

The user equipment shown in Fig. 1 comprising the two radio branches can work in different operating modes. In the first operating mode the two radio branches 30, 40 exchange information with a single telecommunications network using a SIM interface of said telecommunications network, i.e. using only one of the first and second SIM 210, 220, for example first SIM 210 using the first SIM interface 110. In another operating mode, the second operating mode, the first radio branch 30 can exchange information with a first telecommunications network using the first SIM interface 110, the second branch 40 exchanging information with a second telecommunications network using the SIM interface 120 of the second telecommunications network. This operating mode may be a dual SIM operating mode. The telecommunications networks can be networks from different providers or networks of different radio access technologies. When the two networks are networks of different operators, the second operating mode can be dual SIM operating mode. However, it is also possible that in the second operating mode a single SIM interface can be used when the two telecommunications networks are networks of a certain or supportive (e.g. in the case of roaming) provider, and for example with different RATs.

At least in the first operation mode, by way of example, one radio branch can be in communication with the UMTS network and the other radio branch with the GSM network of the same operator or with the LTE network of the same operator.

Furthermore in all operation modes, each operator may use different mobile communication standards such as EGSM (Extented GSM or Extented Global System for Mobile Communications), WCDMA (Wideband Code Division Multiple Access), CDMA2000 and LTE.

In an idle mode both radio branches can be linked to different networks and can wait for a paging occasion.

At least in the second operating mode, upon successful paging the corresponding radio branch, one of the two branches will be used to establish a certain service, whereas the other branch stays on the original network. The user equipment may use the second radio branch for independent service.

In the first operation mode or in a combination of the first and second operation mode, the other radio branch supports the communication of the corresponding radio path by utilizing e.g. antenna diversity techniques.

As can be seen from Fig. 1, the radio signals received by the two radio branches are brought together and combined in the same baseband signal processing, the processing and control unit 150. Since the user equipment has multiple subscriber identity modules 210 and 220, it can authenticate simultaneously on more than one network. It is then possible to dynamically and flexibly assign more than one radio branch to each network to increase the quality of service like data rate or network coverage, e.g. by applying multi-antenna techniques, such as MIMO, antenna diversity or beam forming.

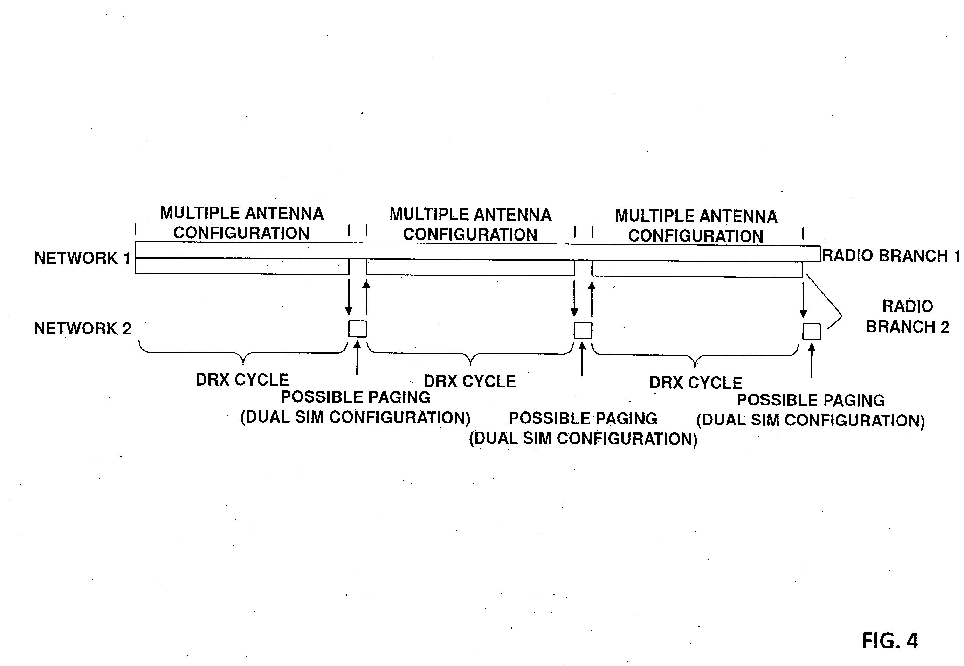

The user equipment can operate in the first operating mode in which the information received by the two radio branches is combined in order to achieve a higher quality of service and/or data rate. Such an operating mode is disclosed in Fig. 4. As shown in the upper part of Fig. 4, the first radio branch is always connected to the first network and the second radio branch of the user equipment is connected to the first network most of the time. However, at each DRX (Discontinuous Reception) cycle of the second network one of the radio branches, here the second radio branch, is switched to the second network to monitor for paging. Since the duration for paging is quite short, there is virtually no loss of quality of service for the first network.

The user equipment works in a default operating mode. The default operating mode may either be determined by the user or predefined by the designer of the user equipment. The default operating mode may be the first operating mode or the second operating mode mentioned above or the operating mode as shown in Fig. 4. Another default operating mode may be an operating mode where one of the radio branches is switched off, and the other radio branch is exchanging information with one of the telecommunications networks using the corresponding subscriber identification interface.

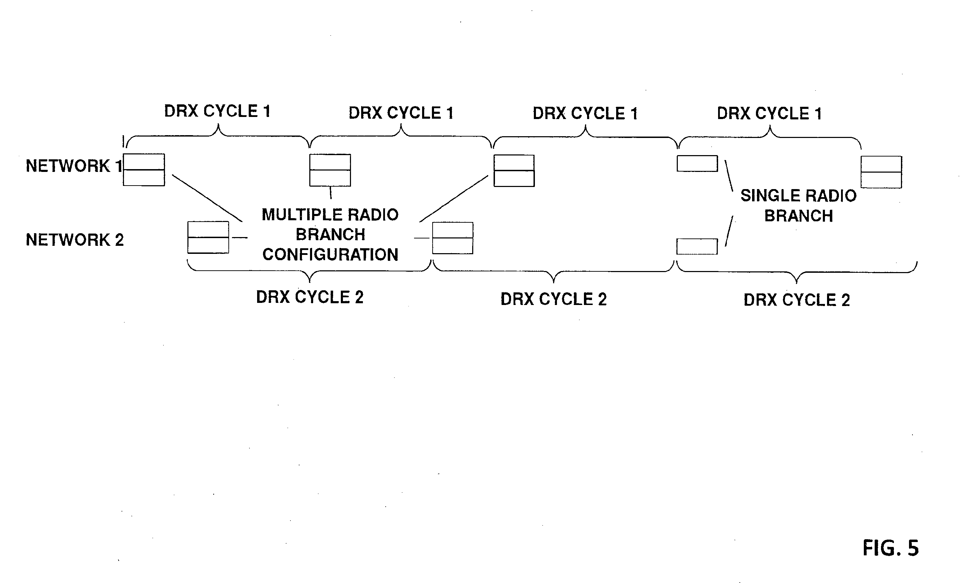

In Fig. 5 another operating mode is shown which can also be a default operating mode. In this operating mode both radio branches are switched from one to the other telecommunications network in an alternating way, both radio branches being simultaneously connected to the same telecommunications network. As shown in Fig. 5, the DRX cycle of the first network is different from the DRX cycle of the second network. As a consequence, a collision situation may occur as shown in the penultimate transmitted burst of information in which information is to be received from both networks simultaneously. When it is detected by the user equipment, e.g. by the processing and controlling unit 150 that information is to be received from both networks simultaneously, the processing and control unit can switch to the second operating mode for a short period of time to receive the information from both networks before the operating mode is again switched to the alternating switching between the two networks as shown in the right part of Fig. 5. The different DRX cycle lengths are not necessarily required, since there is a gap between two successive packet transmissions and it is quite likely that the other network, i.e. the other cell of the other network transmits the packet in these gaps.

Normally, the scheduling is determined by the network side, e.g. a base station. However, it is also possible that the user equipment may order the transmission of packets at certain instances. Since multiple user equipments may order different instances, a scheduling algorithm may be needed within the base station and/or network to optimize packet transmission to different user equipments in such a way the system performance is optimized for coverage and a data throughput. Furthermore, it may be necessary to implement a signalling mechanism within the radio access technologies to be able to transmit signalling commands containing a scheduling from the user equipment to the radio access node.

In case of the collision as shown in Fig. 5 each radio path may be connected to the dedicated network in order to enable a minimum quality of service. In another embodiment the processing and controlling unit can be configured to continue in the alternating reception mode shown in the left part of Fig. 5 receiving one of the data packets transmitted simultaneously. For the missing packet on the other network to be received from the other cell a retransmission request for the missed packet may be issued.

The user equipment may use one of the operating modes described above as a default operating mode and may change to one of the other operating modes in dependence on predefined criterions.

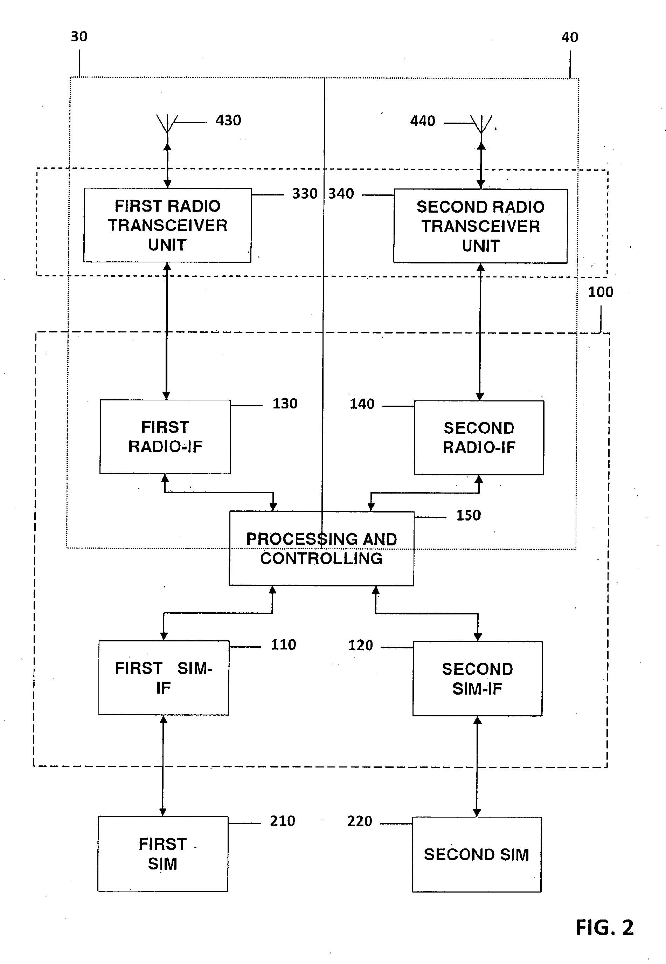

In Fig. 2 another embodiment of the user equipment is shown. In the embodiment of Fig. 2 the same entities carrying out the same functions as in Fig. 1 have the same reference numerals and are not explained in detail anymore. As can be seen from the comparison of Fig. 2 with Fig. 1, in Fig. 2 the first and second radio modules are integrated in a single radio integrated circuit 300. The user equipment shown in Fig. 2 can work in the same way as the one explained in connection with Fig. 1.

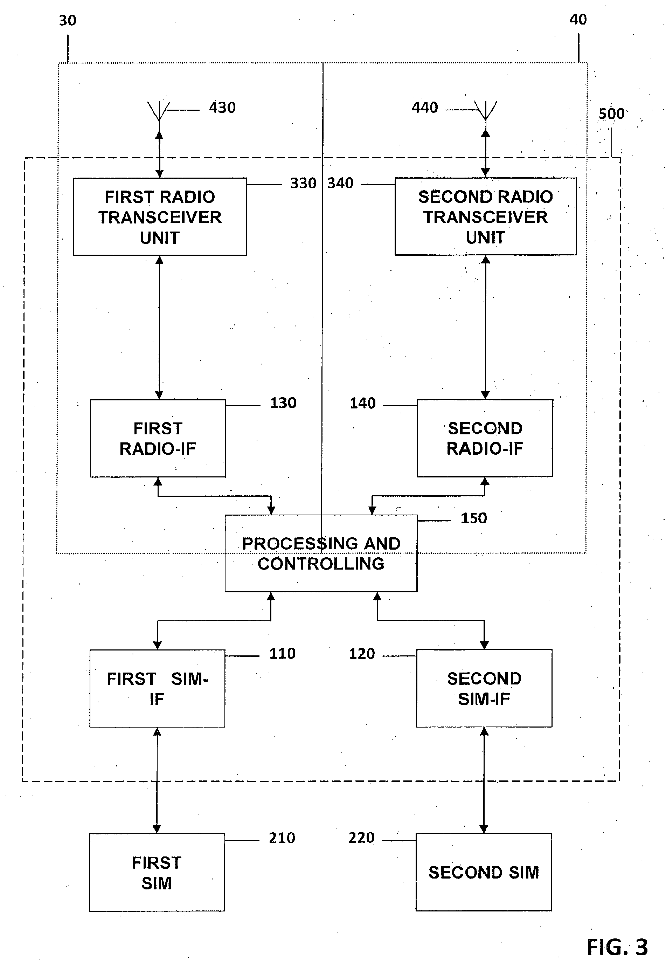

Fig. 3 shows another embodiment of the user equipment which differs from the embodiment shown in Fig. 2 or Fig. 1 by a single chip integrated circuit 500, where for example the first and second SIM interfaces 110 and 120, the processing and controlling unit 150, first and second radio interfaces 130 and 140, and first and second radio transceiver units 330, 340 are integrated in a single integrated circuit.

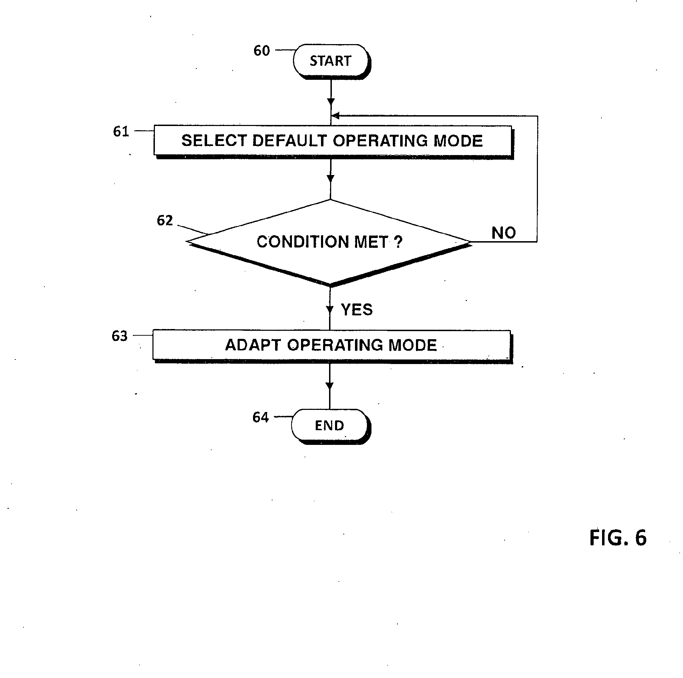

In connection with Fig. 6 the steps are summarized to select a certain default operating mode in dependence on a predefined criterion. The method starts in step 60 and one of the operating modes of the user equipment is selected as a first operating mode (step 61). This default operating mode can be one of the different default operating modes discussed in connection with Figs. 1 to 5. In step 62 it is then asked whether a predefined condition is met. This predefined condition can be the signal strength received by one of the radio branches or the data rate received from one of the telecommunications networks or an user intention. If the predefined condition is met in step 62 the operating mode is adapted accordingly in step 63 and the procedure ends in step 64. If the predefined condition is not fulfilled, the user equipment stays in the previously selected default operating mode, or in the current operating mode when no default operating mode was previously selected, while the procedure is looped back to step 61.

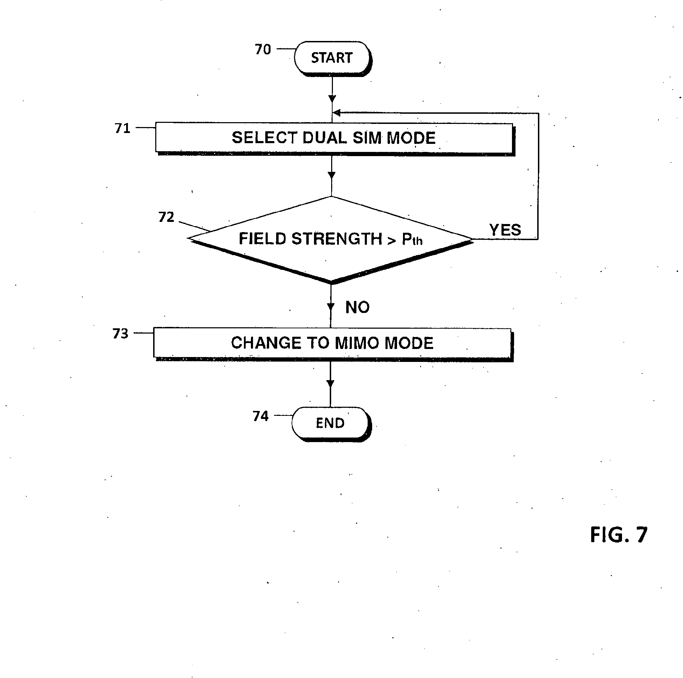

In Fig. 7 the method shown in Fig. 6 is explained in one example. The method starts in step 71 and as a default operating mode the dual SIM operating mode may be selected (step 71). In this operating mode each radio branch uses a different SIM interface for the connection to the respective telecommunications network, e.g. first radio branch 30 uses first SIM interface 110 and second radio branch 40 uses second SIM interface 120. Furthermore, the quality received by one or both of the radio branches 30, 40 is detected, and if it is detected in step 72 that the signal strength is higher than a predefined threshold Pₜₕ, the user equipment may stay in the dual SIM operating mode. However, when it is detected that the signal strength for one of the telecommunications networks is lower than the defined threshold, the user equipment may change to the MIMO operating mode in which both radio branches connect to the same telecommunications network in order to guarantee a certain quality of service (step 73). The method ends in step 74.

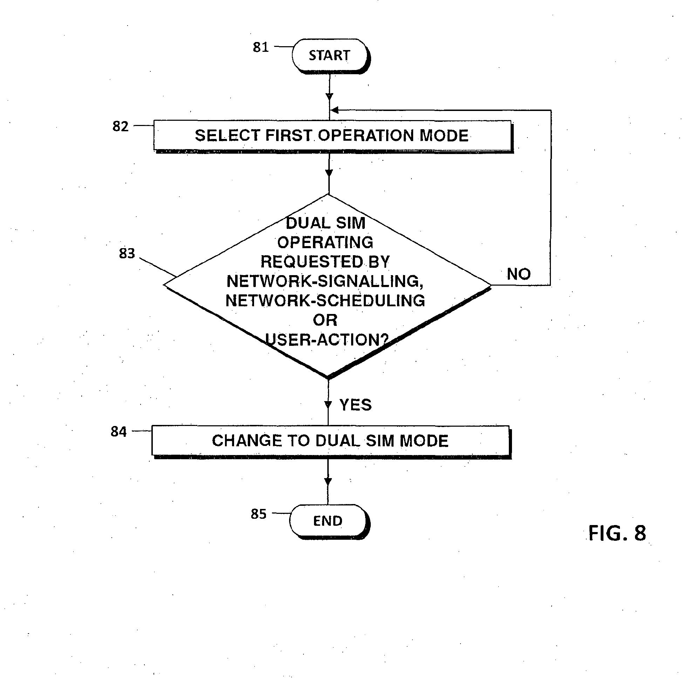

In Fig. 8 another switching situation is described, the method starting in step 81. As a default operating mode here the first operating mode is selected in step 82, where both radio branches exchange information with one telecommunications network. In step 83 it is then asked whether a dual SIM operation is requested by network signalling, network scheduling or user action. If this is not the case, the user stays in the selected first operating mode. If, however, the dual SIM operation request is detected in step 83, the operating mode is changed to the dual SIM mode in step 84, in which each radio branch uses an associated subscriber identification interface for a connection to the respective telecommunications network. The method ends in step 84.

Different telecommunications networks are not restricted to telecommunications networks from different operators. The different telecommunications networks may also be operated by the same operator, but may be designed with different radio access technologies. Each radio access technology may have its own cell and/or its own radio-band. The processing and control unit 150 may exchange information using the two radio branches using the same radio access technology. In a reception case the processing and control unit combines the information received from the two radio branches 30, 40 and in a transmission case the processing and control unit is configured to split the signal to be transmitted into at least two parts that are transmitted by the different radio branches.

Furthermore, information can be exchanged with a single telecommunications network using different radio access technologies corresponding to the reception or transmission of information from different cells or to different cells possibly using different bands. Furthermore, the exchanged information can be provided by different telecommunications networks using different radio access technologies and/or cells and/or radio bands and/or carrier frequencies.

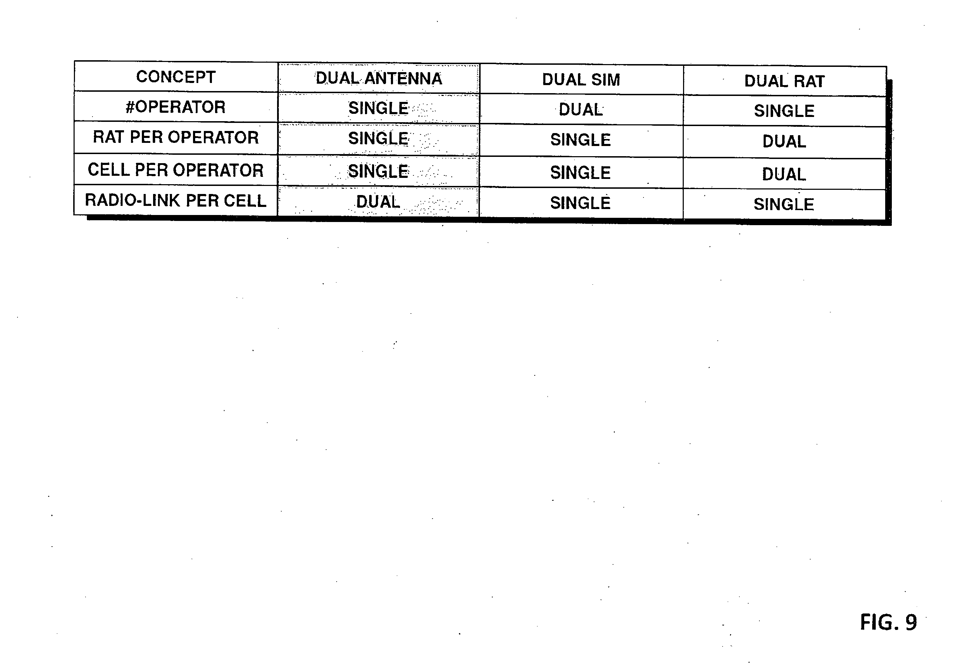

In Fig. 9 different operating modes and the corresponding number of operators, the number of radio access technologies per operator, the cell used per operator and the radio link per cell are listed in a table.

For the dual antenna mode corresponding to the first operating mode a single operator can be used with a single radio access technology per operator and a single cell per operator. As information is exchanged using the first radio branch and the second radio branch, two radio links are used per cell.

In the dual SIM mode corresponding to the second operating mode two operators are used with a single RAT per operator, a single cell per operator and a single radio link per cell. As each network has its own cell, a single radio link per cell is used.

In the dual RAT mode a single operator is used, but two networks of different RATs, such as UMTS, CDMA2000, GSM or LTE. In this operating mode of the user equipment the operator uses two cells and/or two RATs and/or two radio bands for communication with the user equipment. However, a single radio link per cell is provided.

## Claims

1. A method for operating a user equipment, the user equipment comprising a plurality of radio branches (30, 130, 330; 40, 140, 340), each being configured to exchange information with at least one telecommunications network using a subscriber identification interface (110, 120) of the user equipment,
the method comprising the steps of
- processing the information received from one or a plurality of telecommunications networks in a processing and control unit (150), and
- selecting a first operating mode of the information processing and control unit (150) in which at least two out of the plurality of radio branches (30, 130, 330; 40, 140, 340) exchange information with one telecommunications network using one subscriber identification interface (110, 120) associated with said one telecommunications network, or a second operating mode, in which a first radio branch (30, 130, 330) out of the plurality of radio branches (30, 130, 330; 40, 140, 340) exchanges information with a first telecommunications network using a subscriber identification interface (110) associated with said first telecommunications network and in which a second radio branch (40, 140, 340) out of the plurality of radio branches (30, 130, 330; 40, 140, 340) exchanges information with a second telecommunications network using a subscriber identification interface (120) associated with said second telecommunications network.

2. The method according to claim 1, wherein at least in the first operating mode the baseband signals received from at least two out of the plurality of radio branches (30, 130, 330; 40, 140, 340) are combined, and/or baseband signals for transmission via the plurality of radio branches (30, 130, 330; 40, 140, 340) are split.

3. The method according to claim 2, wherein the same information is received from and/or transmitted to one telecommunications network via a plurality of radio-paths using a same radio access technology for connection with the plurality of radio branches, and wherein a plurality of receptions signals is complementary combined and/or a transmission signal is split into a plurality of signals.

4. The method according to claim 2, wherein information is received from and/or transmitted to one or a plurality of telecommunications networks, wherein different radio access technologies and/or cells and/or radio bands are used for at least two out of the plurality of radio-branches (30, 130, 330, 40, 140, 340), and wherein a plurality of reception signals are combined and/or one of the reception signals is selected, and/or a transmission signal is split into a plurality of signals.

5. The method according to any of claims 2 to 4, wherein information is received from and/or transmitted to one or a plurality of telecommunications networks, wherein the information is split up in different parts, wherein a first part is received/transmitted using a first radio access technology and/or a first cell and/or first radio band and/or first carrier frequency, and a second part is received/transmitted using a second radio access technology and/or a second cell and/or second radio band and/or second carrier frequency, and wherein received first and second parts are combined and/or information to be transmitted is split into first and second parts.

6. The method according to claim 1, wherein, at least in the second operating mode, information dedicated for an individual radio branch (30, 130, 330; 40, 140, 340) out of the plurality of radio branches (30, 130, 330; 40, 140, 340) is processed separately and independently from information of other radio branches (40, 140, 340; 30, 130, 330).

7. The method of claim 5, wherein different parts are received and/or transmitted at the same time or wherein different parts are received and/or transmitted in a timely order.

8. The method according to any of claims 1 to 7, wherein, in the first operating mode, one of the radio branches (30, 130, 330; 40, 140, 340) is switched to another telecommunications networks at defined time intervals to monitor whether information is to be received and/or transmitted from and/or to the other telecommunications network.

9. The method according to any of claims 1 to 7, wherein, when the information is received and/or transmitted in a discontinuous reception mode from at least two telecommunications networks, at least two out of the plurality of radio branches (30, 130, 330; 40, 140, 340) switch from a first telecommunications network to one or more other telecommunications networks in an alternating way, wherein at least two radio branches (30, 130, 330; 40, 140, 340) are simultaneously connected to the same telecommunications network.

10. The method according to claim 8 or 9, further comprising the step of detecting a collision situation in which information is to be received and/or transmitted from at least two telecommunications networks simultaneously, wherein if said collision situation is detected,
- different radio branches (30, 130, 330; 40, 140, 340) are connected to each of the at least two telecommunications networks, or
- the at least two out of the plurality of radio branches (30, 130, 330; 40, 140, 340) continue to be switched from said one to the one or more other telecommunications networks in an alternating way, with the at least two radio branches (30, 130, 330; 40, 140, 340) being simultaneously connected to the same telecommunications network, wherein for the information of the telecommunications network that was missed in the collision situation a retransmission is initiated.

11. The method according to any of claims 1 to 10, wherein as a default operating mode at least one of the following operating modes is selected:
- the first operating mode,
- the second operating mode,
- the first operating mode, with one of the radio branches (30, 130, 330; 40, 140, 340) being switched to another telecommunications network at defined time intervals to monitor whether information is to be received and/or transmitted from and/or to the another telecommunications network,
- the alternating combination of the first and second operating mode, with at least two radio branches (30, 130, 330; 40, 140, 340) being switched from one to one or more other telecommunications networks in an alternating way, wherein the at least two radio branches are simultaneously connected to the same telecommunications network.
- a further operating mode, where one of the radio branches (30, 130, 330; 40, 140, 340) is switched OFF and another radio branch (40, 140, 340; 30, 130, 330) exchanges information with a telecommunications network using a subscriber identification interface (110, 120).

12. The method according to any of claims 1 to 11, wherein the operating mode is switched to the first operating mode when a signal reception parameter with which the information is detected from said one telecommunications network is lower than a predefined threshold, or wherein the operating mode is switched to the second operating mode when a signal reception parameter with which the information is detected from said one telecommunications network is higher than a predefined threshold.

13. The method according to any of claims 1 to 11, wherein the operating mode is switched to the one of the first or second operating modes based on network initiation and/or based on user initiation.

14. A user equipment comprising:
- a plurality of radio branches (30, 130, 330; 40, 140, 340), each being configured to exchange information with at least one telecommunications network using a subscriber identification interface (110, 120) of the user equipment,
- a processing and control unit (150) processing the information received from one or a plurality of telecommunications networks and controlling the plurality of radio branches, wherein the processing and control unit (150) is configured to operate in a first operating mode in which at least two of the plurality of radio branches (30, 130, 330; 40, 140, 340) exchange information with one telecommunications network using one subscriber identification interface (110, 120) associated with said one telecommunications network, and to operate in a second operating mode in which a first radio branch (30, 130, 330) out of the plurality of radio branches (30, 130, 330; 40, 140, 340) exchanges information with a first telecommunications network using a subscriber identification interface (110) associated with said first telecommunications network and in which a second radio branch (40, 140, 340) out of the plurality of radio branches (30 130, 330; 40, 140, 340) exchanges information with a second telecommunications network using a subscriber identification interface (120) associated with said second telecommunications network.

15. The user equipment according to claim 14, wherein the processing and control unit is configured to perform a method according to any one of claims 2 to 10.

## Patentansprüche

1. Verfahren zum Betreiben einer Benutzereinrichtung, wobei die Benutzereinrichtung mehrere Funkzweige (30, 130, 330; 40, 140, 340) umfasst, die jeweils so konfiguriert sind, dass sie Informationen mit mindestens einem Telekommunikationsnetz unter Verwendung einer Teilnehmeridentifikationsschnittstelle (110, 120) der Benutzereinrichtung austauschen,
wobei das Verfahren die folgenden Schritte umfasst:
- Verarbeiten der Informationen, die von einem oder mehreren Telekommunikationsnetzen empfangen werden, in einer Verarbeitungs- und Steuereinheit (150), und
- Auswählen eines ersten Betriebsmodus der Informationsverarbeitungs- und Steuereinheit (150), in welchem mindestens zwei der mehreren Funkzweige (30, 130, 330; 40, 140, 340) Informationen mit einem Telekommunikationsnetz unter Verwendung einer mit dem einen Telekommunikationsnetz assoziierten Teilnehmeridentifikationsschnittstelle (110, 120) austauschen, oder eines zweiten Betriebsmodus, in welchem ein erster Funkzweig (30, 130, 330) der mehreren Funkzweige (30, 130, 330; 40, 140, 340) Informationen mit einem ersten Telekommunikationsnetz unter Verwendung einer mit dem ersten Telekommunikationsnetz assoziierten Teilnehmeridentifikationsschnittstelle (110) austauscht, und in welchem ein zweiter Funkzweig (40, 140, 340) der mehreren Funkzweige (30, 130, 330; 40, 140, 340) Informationen mit einem zweiten Telekommunikationsnetz unter Verwendung einer mit dem zweiten Telekommunikationsnetz assoziierten Teilnehmeridentifikationsschnittstelle (120) austauscht.

2. Verfahren nach Anspruch 1, wobei wenigstens im ersten Betriebsmodus die Basisbandsignale, die von mindestens zweien der mehreren Funkzweige (30, 130, 330; 40, 140, 340) empfangen werden, verknüpft werden, und/oder Basisbandsignale zur Übertragung über die mehreren Funkzweige (30, 130, 330; 40, 140, 340) geteilt werden.

3. Verfahren nach Anspruch 2, wobei die gleichen Informationen von einem Telekommunikationsnetz über mehrere Funkpfade unter Verwendung einer gleichen Funkzugangstechnologie zur Verbindung mit den mehreren Funkzweigen empfangen und/oder daran gesendet werden, und wobei mehrere Empfangssignale komplementär verknüpft werden, und/oder ein Sendesignal in mehrere Signale geteilt wird.

4. Verfahren nach Anspruch 2, wobei Informationen von einem oder mehreren Telekommunikationsnetzen empfangen und/oder daran gesendet werden, wobei verschiedene Funkzugangstechnologien und/oder Zellen und/oder Funkbänder für mindestens zwei der mehreren Funkzweige (30, 130, 330, 40, 140, 340) verwendet werden, und wobei mehrere Empfangssignale verknüpft werden, und/oder eines der Empfangssignale ausgewählt wird, und/oder ein Sendesignal in mehrere Signale geteilt wird.

5. Verfahren nach einem der Ansprüche 2 bis 4, wobei Informationen von einem oder mehreren Telekommunikationsnetzen empfangen und/oder daran gesendet werden, wobei die Informationen in verschiedene Teile aufgeteilt werden, wobei ein erster Teil unter Verwendung einer ersten Funkzugangstechnologie und/oder einer ersten Zelle und/oder eines ersten Funkbandes und/oder einer ersten Trägerfrequenz empfangen/gesendet wird, und ein zweiter Teil unter Verwendung einer zweiten Funkzugangstechnologie und/oder einer zweiten Zelle und/oder eines zweiten Funkbandes und/oder einer zweiten Trägerfrequenz empfangen/gesendet wird, und wobei empfangene erste und zweite Teile verknüpft werden, und/oder zu sendende Informationen in erste und zweite Teile geteilt werden.

6. Verfahren nach Anspruch 1, wobei wenigstens im zweiten Betriebsmodus Informationen, die für einen einzelnen Funkzweig (30, 130, 330; 40, 140, 340) der mehreren Funkzweige (30, 130, 330; 40, 140, 340) bestimmt sind, getrennt und unabhängig von Informationen von anderen Funkzweigen (40, 140, 340; 30, 130, 330) verarbeitet werden.

7. Verfahren nach Anspruch 5, wobei verschiedene Teile zum gleichen Zeitpunkt empfangen und/oder gesendet werden, oder wobei verschiedene Teile in einer zeitlichen Reihenfolge empfangen und/oder gesendet werden.

8. Verfahren nach einem der Ansprüche 1 bis 7, wobei im ersten Betriebsmodus einer der Funkzweige (30, 130, 330; 40, 140, 340) in definierten Zeitintervallen zu einem anderen Telekommunikationsnetz umgeschaltet wird, um zu überwachen, ob Informationen vom anderen Telekommunikationsnetz empfangen und/oder daran gesendet werden sollen.

9. Verfahren nach einem der Ansprüche 1 bis 7, wobei, wenn Informationen in einem diskontinuierlichen Empfangsmodus von mindestens zwei Telekommunikationsnetzen empfangen und/oder gesendet werden, mindestens zwei der mehreren Funkzweige (30, 130, 330; 40, 140, 340) abwechselnd von einem ersten Telekommunikationsnetz zu einem oder mehreren anderen Telekommunikationsnetzen umschalten, wobei mindestens zwei Funkzweige (30, 130, 330; 40, 140, 340) gleichzeitig mit dem gleichen Telekommunikationsnetz verbunden werden.

10. Verfahren nach Anspruch 8 oder 9, ferner umfassend den Schritt des Erkennens einer Kollisionssituation, in welcher Informationen von mindestens zwei Telekommunikationsnetzen gleichzeitig empfangen und/oder daran gesendet werden sollen, wobei, wenn die Kollisionssituation erkannt wird,
- verschiedene Funkzweige (30, 130, 330; 40, 140, 340) mit jedem der mindestens zwei Telekommunikationsnetze verbunden werden, oder
- die mindestens zwei der mehreren Funkzweige (30, 130, 330; 40, 140, 340) weiterhin abwechselnd von dem einen zu dem einen oder den mehreren anderen Telekommunikationsnetzen umgeschaltet werden, wobei die mindestens zwei Funkzweige (30, 130, 330; 40, 140, 340) gleichzeitig mit dem gleichen Telekommunikationsnetz verbunden werden, wobei für die Informationen des Telekommunikationsnetzes, die in der Kollisionssituation nicht bekommen wurden, eine Wiederholungssendung initiiert wird.

11. Verfahren nach einem der Ansprüche 1 bis 10, wobei als Standardbetriebsmodus mindestens einer der folgenden Betriebsmodi ausgewählt wird:
- der erste Betriebsmodus,
- der zweite Betriebsmodus,
- der erste Betriebsmodus, wobei einer der Funkzweige (30, 130, 330; 40, 140, 340) in definierten Zeitintervallen zu einem anderen Telekommunikationsnetz umgeschaltet wird, um zu überwachen, ob Informationen vom anderen telekommunikationsnetz empfangen und/oder daran gesendet werden sollen,
- die abwechselnde Kombination des ersten und zweiten Betriebsmodus, wobei mindestens zwei Funkzweige (30, 130, 330; 40, 140, 340) abwechselnd von einem zu einem oder mehreren anderen Telekommunikationsnetzen umgeschaltet werden, wobei die mindestens zwei Funkzweige gleichzeitig mit dem gleichen Telekommunikationsnetz verbunden werden,
- ein weiterer Betriebsmodus, wobei einer der Funkzweige (30, 130, 330; 40, 140, 340) auf AUS geschaltet wird, und ein anderer Funkzweig (40, 140, 340; 30, 130, 330) Informationen mit einem Telekommunikationsnetz unter Verwendung einer Teilnehmeridentifikationsschnittstelle (110, 120) austauscht.

12. Verfahren nach einem der Ansprüche 1 bis 11, wobei der Betriebsmodus in den ersten Betriebsmodus geschaltet wird, wenn ein Signalempfangsparameter, mit dem die Informationen von dem einen Telekommunikationsnetz erkannt werden, niedriger als eine vordefinierte Schwelle ist, oder wobei der Betriebsmodus in den zweiten Betriebsmodus geschaltet wird, wenn ein Signalempfangsparameter, mit welche die Informationen von dem einen Telekommunikationsnetz empfangen werden, höher als eine vordefinierte Schwelle ist.

13. Verfahren nach einem der Ansprüche 1 bis 11, wobei der Betriebsmodus basierend auf Netzinitiierung und/oder basierend auf Benutzerinitiierung in den einen der ersten und zweiten Betriebsmodi geschaltet wird.

14. Benutzereinrichtung, umfassend:
- mehrere Funkzweige (30, 130, 330; 40, 140, 340), die jeweils so konfiguriert sind, dass sie Informationen mit mindestens einem Telekommunikationsnetz unter Verwendung einer Teilnehmeridentifikationsschnittstelle (110, 120) der Benutzereinrichtung austauschen,
- eine Verarbeitungs- und Steuereinheit (150), welche die Informationen verarbeitet, die von einem oder mehreren Telekommunikationsnetzen empfangen werden, und die mehreren Funkzweige steuert, wobei die Verarbeitungs- und Steuereinheit (150) eingerichtet ist, in einem ersten Betriebsmodus zu arbeiten, in welchem mindestens zwei der mehreren Funkzweige (30, 130, 330; 40, 140, 340) Informationen mit einem Telekommunikationsnetz unter Verwendung einer mit dem einen Telekommunikationsnetz assoziierten Teilnehmeridentifikationsschnittstelle (110, 120) austauschen, und in einem zweiten Betriebsmodus zu arbeiten, in welchem einer erster Funkzweig (30, 130, 330) der mehreren Funkzweige (30, 130, 330; 40, 140, 340) Informationen mit einem ersten Telekommunikationsnetz unter Verwendung einer mit dem ersten Telekommunikationsnetz assoziierten Teilnehmeridentifikationsschnittstelle (110) austauscht, und in welchem ein zweiter Funkzweig (40, 140, 340) der mehreren Funkzweige (30, 130, 330; 40, 140, 340) Informationen mit einem zweiten Telekommunikationsnetz unter Verwendung einer mit dem zweiten Telekommunikationsnetz assoziierten Teilnehmeridentifikationsschnittstelle (120) austauscht.

15. Benutzereinrichtung nach Anspruch 14, wobei die Verarbeitungs- und Steuereinheit eingerichtet ist, ein Verfahren nach einem der Ansprüche 2 bis 10 durchzuführen.

## Revendications

1. Procédé de fonctionnement d'un équipement d'utilisateur, l'équipement d'utilisateur comprenant une pluralité de branches radio (30, 130, 330; 40, 140, 340), étant chacune configurée pour échanger une information avec au moins un réseau de télécommunications en utilisant une interface d'identification d'abonné (110, 120) de l'équipement d'utilisateur,
le procédé comprenant les étapes consistant à :
- traiter l'information reçue depuis un d'une pluralité de réseau de télécommunications dans une unité de traitement et de commande (150) et
- sélectionner un premier mode de fonctionnement de l'unité de traitement et de commande d'information (150), dans lequel au moins deux parmi la pluralité de branches radio (30, 130, 330; 40, 140, 340) échangent des informations avec un réseau de télécommunications utilisant une interface d'identification d'abonné (110, 120) associée au dit réseau de télécommunications, ou un second mode de fonctionnement, dans lequel une première branche radio (30, 130, 330) parmi la pluralité de branches radio (30, 130, 330; 40, 140, 340) échange des informations avec un premier réseau de télécommunications en utilisant une interface d'identification d'abonné (110) associé au dit premier réseau de télécommunications et dans lequel une seconde branche radio (40, 140, 340) parmi la pluralité de branches radio (30, 130, 330; 40, 140, 340) échange des informations avec un second réseau de télécommunications en utilisant une interface d'identification d'abonné (120) associée au dit second réseau de télécommunications.

2. Procédé selon la revendication 1, dans lequel au moins dans le premier mode de fonctionnement les signaux de bande de base reçus depuis au moins deux de la pluralité de branches radio (30, 130, 330; 40, 140, 340) sont combinés et/ou les signaux de bande de base en vue d'une transmission via la pluralité de branche radio (30, 130, 330 ; 40, 140, 340) sont divisés.

3. Procédé selon la revendication 2, dans lequel la même information est reçue depuis et/ou transmise vers un réseau de télécommunications via une pluralité de trajets radio en utilisant une même technologie d'accès radio pour les connexions avec la pluralité de branches radio et dans lequel une pluralité de signaux de réception est combinée de manière complémentaire et/ou un signal de transmission est divisé en une pluralité de signaux.

4. Procédé selon la revendication 2, dans lequel l'information est reçue depuis et/ou transmise vers un ou une pluralité de réseau de télécommunications, dans lequel différentes technologies d'accès radio et/ou cellules et/ou bandes radio sont utilisées pour au moins deux de la pluralité de branches radio (30, 130, 330; 40, 140, 340) et dans lequel une pluralité de signaux de réception sont combinés et/ou un des signaux de réception est sélectionné et/ou un signal de transmission est divisé en une pluralité de signaux.

5. Procédé selon une quelconque des revendications 2 à 4, dans lequel une information est reçue depuis et/ou transmise vers un d'une pluralité de réseaux de télécommunications, dans lequel l'information est divisée en différentes parties, dans lequel une première partie est reçue/transmise en utilisant une première technologie d'accès radio et/ou une première cellule et/ou une première bande radio et/ou une première fréquence porteuse, et une seconde partie est reçue/transmise en utilisant une seconde technologie d'accès radio et/ou une seconde cellule et/ou une seconde bande radio et/ou une seconde fréquence porteuse et dans lequel la première et la seconde partie sont combinées et/ou une information à transmettre est divisée en première et seconde partie.

6. Procédé selon la revendication 1, dans lequel au moins dans le second mode de fonctionnement, une information dédiée pour une branche radio individuelle (30, 130, 330; 40, 140, 340) parmi la pluralité de branches radio (30, 130, 330; 40, 140, 340) est traitée séparément et indépendamment de l'information des autres branches radio (40, 140, 340; 30, 130, 330).

7. Procédé selon la revendication 5, dans lequel différentes parties sont reçues et/ou transmises en même temps ou dans lequel différentes parties sont reçues et/ou transmises dans un ordre temporel.

8. Procédé selon une quelconque des revendications 1 à 7, dans lequel dans le premier mode de fonctionnement une des branches radio (30, 130, 330; 40, 140, 340) est commutée vers un autre réseau de télécommunications à des intervalles de temps défini afin de surveiller si l'information doit être reçue et/ou transmise vers l'autre réseau de télécommunications.

9. Procédé selon une quelconque des revendications 1 à 7, dans lequel quand l'information est reçue et/ou transmise dans un mode de réception discontinue depuis au moins deux réseaux de télécommunications, au moins deux parmi la pluralité de branches radio (30, 130, 330; 40, 140, 340) commutent d'un premier réseau de télécommunications à un ou plus autres réseaux de télécommunications de manière alternée, dans lequel au moins deux branches radio (30, 130, 330; 40, 140, 340) sont connectées simultanément au même réseau de télécommunications.

10. Procédé selon la revendication 8 ou 9, comprenant en outre l'étape de détection d'une situation de collision dans laquelle une information doit être reçue et/ou transmise depuis au moins deux réseau de télécommunications simultanément, dans lequel si ladite situation de collision est détectée,
- différentes branches radio (30, 130, 330; 40, 140, 340) sont connectées à chacun d'au moins deux réseau de télécommunications ou
- au moins deux parmi la pluralité de branches radio (30, 130, 330; 40, 140, 340) continuent à être commutées de l'un à l'autre des réseaux de télécommunications d'une manière alternée, avec au moins deux branches radio (30, 130, 330; 40, 140, 340) étant connectées simultanément au même réseau de télécommunications, dans lequel pour l'information du réseau de télécommunications qui a été perdue dans la situation de collision une retransmission est amorcée.

11. Procédé selon une quelconque des revendications 1 à 10, dans lequel comme mode de fonctionnement par défaut au moins un des modes de fonctionnement suivant est sélectionné :
- le premier mode de fonctionnement,
- le second mode de fonctionnement,
- le premier mode de fonctionnement avec une des branches radio (30, 130, 330; 40, 140, 340) étant commutée vers un autre réseau de télécommunications à des intervalles de temps définis pour surveiller si l'information doit être reçue et/ou transmise depuis et/ou vers l'autre réseau de télécommunications,
- la combinaison alternée du premier et du second mode de fonctionnement, avec au moins deux branches radio (30, 130, 330; 40, 140, 340) étant commutées de l'un à l'autre des réseaux de télécommunications de manière alternée, dans lequel au moins deux branches radio sont connectées simultanément aux même réseau de télécommunications,
- un autre mode de fonctionnement, dans lequel une branche radio (30, 130, 330; 40, 140, 340) est mise hors tension et une autre branche radio (40, 140, 340; 30, 130, 330) échange des informations avec un réseau de télécommunications en utilisant une interface d'identification d'abonné (110, 120).

12. Procédé selon une quelconque des revendications 1 à 11, dans lequel le mode de fonctionnement est commuté au premier mode de fonctionnement quand un paramètre de réception de signal avec lequel l'information est détectée depuis un réseau de télécommunications est inférieur à un seuil prédéfini ou dans lequel le mode de fonctionnement est commuté au second mode de fonctionnement quand un paramètre de réception de signal avec lequel l'information est détectée depuis un réseau de télécommunications est supérieur à un seuil prédéfini.

13. Procédé selon une quelconque des revendications 1 à 11, dans lequel le mode de fonctionnement est commuté à un du premier ou second mode de fonctionnement sur la base d'un lancement de réseau/ou sur la base d'un lancement d'utilisateur.

14. Équipement d'utilisateur comprenant :
- une pluralité de branches radio (30, 130, 330; 40, 140, 340) étant chacune configurée pour échanger des informations avec au moins un réseau de télécommunications en utilisant une interface d'identification d'abonné (110, 120) de l'équipement d'utilisateur,
- une unité de traitement et de commande (150) traitant les informations reçues depuis une pluralité de réseaux de télécommunications et commandant la pluralité de branches radio, dans lequel l'unité de commande et de traitement (150) est configuré pour fonctionner dans un premier mode de fonctionnement, dans lequel au moins deux parmi la pluralité de branches radio (30, 130, 330; 40, 140, 340) échangent des informations avec un réseau de télécommunications utilisant une interface d'identification d'abonné (110, 120) associée au dit réseau de télécommunications, ou fonctionner dans un second mode de fonctionnement, dans lequel une première branche radio (30, 130, 330) parmi la pluralité de branches radio (30, 130, 330; 40, 140, 340) échange des informations avec un premier réseau de télécommunications en utilisant une interface d'identification d'abonné (110) associé au dit premier réseau de télécommunications et dans lequel une seconde branche radio (40, 140, 340) parmi la pluralité de branches radio (30, 130, 330; 40, 140, 340) échange des informations avec un second réseau de télécommunications en utilisant une interface d'identification d'abonné (120) associée au dit second réseau de télécommunications.

15. Équipement d'utilisateur selon la revendication 14, dans lequel l'unité de traitement et de commande est configurée pour mettre en oeuvre procédé selon une quelconque des revendications 2 à 10.
